# EUROPÄISCHE PATENTSCHRIFT

(11) **EP 3 857 220 B1**
(45) Veröffentlichungstag und Bekanntmachung des Hinweises auf die Patenterteilung: **18.01.2023**
(21) Anmeldenummer: 19783420.3
(22) Anmeldetag: 24.09.2019
(51) Int. Cl.: G01N 31/22, G01N 21/78

(54) **VERFAHREN, VORRICHTUNG UND INDIKATOR ZUR LOKALISATION VON ÜBERHITZUNGSSCHÄDEN**
METHOD, DEVICE AND INDICATOR FOR LOCALIZING DAMAGE BY OVERHEATING
PROCÉDÉ, DISPOSITIF ET INDICATEUR POUR LOCALISER DES DOMMAGES PAR SURCHAUFFE

(30) Priorität: 24.09.2018 DE 102018007509
(43) Veröffentlichungstag der Anmeldung: 04.08.2021
(73) Patentinhaber: 4GENE GmbH, 74080 Heilbronn (DE)
(72) Erfinder: ADAMSKI, Heimo, 85465 Langenpreising (DE); FISCHER, Thilo, 85737 Ismaning (DE); HUANG, Fong-Chin, 85354 Freising (DE); VALLON, Tobias, 74080 Heilbronn (DE)
(74) Vertreter: Aera A/S
(86) Internationale Anmeldenummer: PCT/DE2019/100840
(87) Internationale Veröffentlichungsnummer: WO 2020/064054

(56) Entgegenhaltungen:
- US-A- 3 576 604
- US-A1- 2008 070 231
- US-A1- 2008 070 272

## Beschreibung

Die vorliegende Erfindung betrifft ein Verfahren zum Versehen einer technischen Einrichtung mit einem Warnsignal gegenüber Erhitzung, einen Artikel umfassend eine chromogene und eine olfaktorische Indikatorsubstanz, eine Zusammensetzung umfassend eine chromogene und eine olfaktorische

Indikatorsubstanz und die Verwendung der erfindungsgemäßen Zusammensetzung. Überhitzungsschäden von technischen Installationen können teilweise durch damit einhergehende Oxidationsvorgänge, Schmelzvorgänge oder andere Strukturveränderungen an der Oberfläche an den Schadstellen direkt sichtbar werden. Dies setzt in der Regel eine relativ starke Temperaturerhöhung voraus.

Besonders im Zusammenhang mit Systemen, bei denen eine Überwachung der Betriebstemperatur durch punktuelle Thermosensoren stattfindet, d.h. durch einen Alarm das Erreichen von zu hohen Temperaturen verhindert werden kann, aber auch in anderen Fällen, ist es wünschenswert, die überhitzten Stellen erkennen zu können, um so eine Fehleranalyse und Instandsetzung zu erleichtern.

Neben allen rein physikalischen Methoden, um Wärmebilder einer in Betrieb befindlichen Installation mit verschiedenen Methoden zu erzeugen, gibt es auch physikalisch-chemische, wie die auf Flüssigkristallen basierten Methoden. Für eine solche "Hotspot-Analyse" können vorab in der Installation Aufkleber mit thermochromen Substanzen angebracht werden, die nur punktuell arbeiten. Es werden aber auch entsprechende Folien zur Flächenabdeckung verwendet.

Die genannten Methoden setzen eine Analyse während oder kurz nach dem Betrieb, also noch im überhitzten Zustand voraus. Es wird dabei mit reversibel thermochromen Substanzen gearbeitet, was eine Wiederholbarkeit des benutzten Effektes erlaubt. Informationen und weiterführende Literatur finden sich unter *hltps:*//*www.iap.fraunhofer.de*/*de*/*Forschungsbereiche*/*Funktionale_Polymersysteme*/ *chromogene_polymere.html*

Irreversibel thermochrome Substanzen werden vor allem im chemischen Bereich bei Thermofarben bzw. Thermolacken eingesetzt, die eine Er- oder Überhitzung signalisieren können.

Die bekannten Verfahren haben den Nachteil, dass sie vielfach auf Substanzen basieren, die nicht nachhaltig produziert werden können. Oft setzt die Aufbringung der thermochromen Substanz auch eine entsprechende Lackierung voraus. Ferner lassen sie sich nicht vorteilhaft mit einem olfaktorischen Überhitzungsschutz kombinieren, der ebenfalls auf Glykosiden, nämlich Glykosiden von Warngerüchen, beruhen kann (WO201811114124 A1).

Es ist daher die Aufgabe der vorliegenden Erfindung eine Zusammensetzung und Verfahren zur Lokalisation von Überhitzungsstellen bereitzustellen, welches nachhaltig produzierbare Indikatorsubstanz(klasse) verwendet, die irreversibel gespalten werden kann, um eine Lokalisierung von überhitzten Schadstellen auch nach deren Abkühlung zu ermöglichen.

Vorteilhaft sollten die Indikatorsubstanz(en) nach Möglichkeit nicht oder nur gering toxisch und nicht umweltgefährdend sein.

Die Aufgabe der vorliegenden Erfindung ist gelöst durch das Verfahren zum Versehen einer technischen Einrichtung mit einem Warnsignal gegenüber Erhitzung, wobei eine chromogene und eine olfaktorische Indikatorsubstanz auf eine Einrichtung oder deren Komponenten aufgebracht wird oder eine chromogene Indikatorsubstanz einer Ummantelung beigefügt wird; wobei die chromogene Indikatorsubstanz ausgewählt ist aus einem Ester, Thioester, Ether, Thioether, Amid, Acetal, Halbacetal, Carbamat, Glykosid und/oder Kombinationen daraus, bevorzugt ausgewählt aus einem Glykosid, Acetat, Sulfat, Phosphat und/oder Kombinationen daraus, bevorzugter ausgewählt aus einem Glykosid, noch bevorzugter ausgewählt aus einem N-Glykosid, O-Glykosid, S-Glykosid und/oder Kombination daraus, wobei das Glykosid ein alpha- oder beta-Anomer ist; wobei die chromogene Indikatorsubstanz bei einer Temperatur größer oder gleich 50°C und kleiner oder gleich 300°C irreversibel spaltbar, bevorzugt pyrolysierbar, ist; und wobei wenigstens ein Spaltprodukt, bevorzugt wenigstens ein Pyrolyseprodukt, der chromogenen Indikatorsubstanz ein von der chromogenen Indikatorsubstanz verschiedenes Absorptionsspektrum im sichtbaren Bereich oder eine von der chromogenen indikatorsubstanz verschiedene Fluoreszenz aufweist. Das Verfahren der vorliegenden Erfindung ist im Anspruch 1 definiert.

Es wurde gefunden, dass sich zur gezielten Farbveränderung überhitzter Schadstellen chromogene Indikatorsubstanzen eignen. Der Vorteil dieser Substanzen ist, dass sie durch Hitzeeinwirkung irreversibel gespalten werden und hierdurch die Spaltprodukte ein von der chromogenen Indikatorsubstanz verschiedenes Absorptionsspektrum im sichtbaren Bereich oder eine von der chromogenen Indikatorsubstanz verschiedene Fluoreszenz aufweisen.

Chromogene Indikatorsubstanzen im Sinne der Erfindung sind Derivate von Farbstoffen oder Farbstoffvorläufern. Insbesondere sind dies Phosphate, Sulfate, Acetate und Glykoside von Farbstoffen oder Farbstoffvorläufern. Wenigstens ein Spaltprodukt der chromogenen Indikatorsubstanz weist ein von der chromogenen Indikatorsubstanz verschiedenes Absorptionsspektrum im sichtbaren Bereich oder eine von der chromogenen Indikatorsubstanz verschiedene Fluoreszenz auf. Bevorzugt sind die chromogenen Indikatorsubstanzen Glykoside von Farbstoffen oder Farbstoffvorläufern. Diese werden üblicherweise hydrolytisch gespalten, nämlich mit Enzymen, um deren Aktivität zu bestimmen. Diese Glykoside können aber auch durch Erhitzung, insbesondere pyrolytisch, gespalten werden und eignen sich durch den irreversiblen Charakter dieser Spaltung, insbesondere Pyrolyse, und der folgenden Verfärbung sehr gut zur Lokalisation von Schadstellen. Auch in der Enzymologie wenig gebräuchliche Glukoside wie beispielsweise das Salicin sind, teilweise in Kombination mit Übergangsmetallionen, hierfür geeignet; sie sind ferner nachhaltig verfügbar, in der Regel nicht umweltgefährdend, und kostengünstiger als Glykoside aus der Enzymologie.

Unter Acetaten, Phosphaten und Sulfaten sind im Sinne der Erfindung jeweils die entsprechenden Ester zu verstehen, keine Salze.

Ein Aglykon ist der Nicht-Kohlenhydrat-Bestandteil eines Glykosid-Moleküls. Anomere sind die stereoisomeren Formen der glykosidischen Bindung.

Chelate sind Komplexe mit mehrzähnigen (mehrwertigen) Liganden.

Chromogen sind im Sinne der Erfindung Substanzen, die bei Erwärmung eine Farbe oder Fluoreszenz entwickeln, oder bei denen eine schon vorhandene Farbe oder Fluoreszenz sich durch Erwärmung verändert.

Derivat ist eine einer chemischen Struktur nahe verwandte Struktur.

Glukoside sind Glykoside, bei denen das verknüpfte Kohlenhydrat die Glukose ist. Glykoside sind im Sinne der Erfindung Verbindungen mit Kohlenhydraten, insbesondere O-, N-, S-Glykoside, wobei keine C-Glykoside umfasst sind. In der Beschreibung aufgeführte Glykoside sind O-Glykoside, d.h. Glykoside von Alkoholen. Heteroanalog sind chemische Strukturen, bei denen ein Atom durch ein nahe verwandtes Element ersetzt ist, beispielsweise Sauerstoff durch Schwefel oder durch Stickstoff.

Indigoide Verbindungen sind chemische Verbindungen, die generelle strukturelle Verwandtschaft zur Struktur des Indigos aufweisen.

Thermochrome Verbindungen, sind Verbindungen, die bei Temperaturänderung ihre Farbe verändern. Es gibt reversible und irreversible Thermochrome bzw. Farbveränderungen.

Übergangsmetalle sind Metalle der Nebengruppen des Periodensystems der Elemente.

Unter Pyrolyse im Sinne der Erfindung wird die Spaltung organischer Verbindungen, insbesondere von Glykosiden, verstanden, wobei durch hohe Temperaturen, das heißt 50°C bis 900°C ein Bindungsbruch innerhalb von einem Molekül in wenigstens zwei Moleküle erzwungen wird und insbesondere bei Glykosiden das Aglykon freigesetzt wird. Die kritische Temperatur im Sinne der Erfindung ist die Temperatur, bei der die Pyrolyse einsetzt und eine erste Farb- und/oder Fluoreszenzveränderung auftritt.

Beschichten im Sinne der Erfindung ist das Auftragen chromogener und olfaktorischer Indikatorsubstanzen sowie von Hilfsstoffen auf zu kontrollierende Oberflächen.

Flächendeckend im Sinne der Erfindung, bedeutet, dass wenigstens ein Teil einer Fläche mit einer Substanz oder einem Artikel, der die entsprechende Substanz enthält, bedeckt ist.

Die Veränderung der Farbe und die irreversible Spaltung der chromogenen Indikatorsubstanzen unter Veränderung des Absorptionsspektrums im sichtbaren Bereich oder eine von der chromogenen Indikatorsubstanz verschiedene Fluoreszenz erlaubt eine genaue Lokalisation von Überhitzungsschäden. Insbesondere da die irreversible Spaltung, bevorzugt Pyrolyse, erst bei erhöhten Temperaturen stattfindet.

Ein Vorteil von Glykosiden als chromogene Indikatorsubstanzen liegt darin, dass es sich bei diesen zumeist um Naturstoffe, die nachhaltig produzierbar sind, handelt oder es sich bei diesen aus Naturstoffen nachhaltig hergestellten Indikatorsubstanzen handelt. Ebenso sind diese Substanzen beziehungsweise ihre Spaltprodukte zumeist nicht oder nur gering toxisch. Bei der irreversiblen Spaltung von Glykosiden wird regelmäßig das Aglykon freigesetzt.

Weiterhin bevorzugt ist die chromogene Indikatorsubstanz bei einer Temperatur kleiner oder gleich 900°C, bevorzugt kleiner oder gleich 500°C, bevorzugter kleiner oder gleich 300°C und noch bevorzugter kleiner oder gleich 250°C spaltbar, bevorzugt irreversibel spaltbar, bevorzugter pyrolysierbar.

Bevorzugt ist die chromogene Indikatorsubstanz in einem Substanzgemisch mit Hilfssubstanzen enthalten, bevorzugter sind die Hilfssubstanzen ausgewählt aus Übergangsmetallsalzen, Brönstedtsäuren, Lewissäuren, Basen, Salzen, Trägerstoffen und Stoffen zur Immobilisierung und/oder Kombinationen hieraus, bevorzugter Lewissäuren; und/oder
wird die chromogene Indikatorsubstanz mittels Streichen, Sprühen oder eines Immobilisierungsmittels, insbesondere eines Aufklebers oder einer Folie, auf die Einrichtung oder deren Komponenten aufgebracht; und/oder
ist die chromogene Indikatorsubstanz ausgewählt aus Acetat, Phosphat, Sulfat und/oder Kombinationen daraus.

Bevorzugt handelt es sich bei den Brönstedtsäuren und/oder Lewissäuren um Säuren zur Veränderung der Pyrolysetemperatur.

Weiterhin kann das Substanzgemisch auch Geruchsstoffe, Lösungsmittel, Geruchsabsorber, Tenside und/oder Kombinationen daraus, bevorzugt Geruchsabsorber, Geruchsstoffe und/oder Kombinationen daraus umfassen.

Ferner bevorzugt wird die chromogene Indikatorsubstanz zusammen mit einem Hilfsstoff aufgebracht, der eine enzymatische Spaltung oder einen Abbau durch Mikroorganismen der chromogenen Indikatorsubstanz hemmt oder verhindert, beispielsweise Parabene (Ester der para-Hydroxybenzoesaure).

Weiterhin bevorzugt ist die technische Einrichtung eine durch Überhitzung gefährdete Einrichtung und diese wird mit der chromogenen Indikatorsubstanz flächendeckend beschichtet oder wird einer Ummantelung beigefügt, bevorzugt ist die technische Einrichtung ausgewählt aus elektrischen Installationen, Röhren für Gase oder Flüssigkeiten, elektrischen Anlagen oder Bauteilen davon, beispielsweise Kabeln, Kabelschachten, Spulenwicklungen, Motor-, Generator- und/oder Transformatorwicklungen; Achslagern, Leitungen für Flüssigkeiten, insbesondere gefährliche Flüssigkeiten, Behältnissen umfassend leicht entzündliche und/oder explosive Stoffe; medizinische Geräten; IT-Anlagen wie Servern; Anlagen in Luft- und/oder Raumfahrt oder in anderen Personentransportmitteln; Elektronik im häuslichen Bereich und/oder Alltag wie Akkumulatoren, beispielsweise in Handys, Laptops oder Tablets, insbesondere Lithiumakkumulatoren; und/oder Schmiermitteln; und/oder
ändern sich durch die Spaltung der chromogenen Indikatorsubstanz die Farbe und/oder die Fluoreszenz so auffällig, dass der überhitzte Bereich der Beschichtung oder der Ummantelung während und besonders auch nach der Überhitzung durch Augenschein, im Fall der Fluoreszenz unter speziellen Lichtverhältnissen, deutlich zu erkennen ist, und die Schadstelle somit direkt lokalisiert werden kann; oder
ändern sich durch die Spaltung der chromogenen Indikatorsubstanz die Farbe und/oder die Fluoreszenz so auffällig, dass der überhitzte Bereich der Beschichtung oder Ummantelung während und besonders auch nach der Überhitzung durch Augenschein, im Fall der Fluoreszenz unter speziellen Lichtverhältnissen, deutlich zu erkennen ist, und die Schadstelle somit direkt lokalisiert werden kann, wobei die Änderung der Farbe und/oder Fluoreszenz der chromogenen Indikatorsubstanz durch das aus dem Glykosid abgespaltene Aglykon direkt oder aus Folgereaktion(en), auch mit eventuellen Hilfssubstanzen und/oder Luftsauerstoff, hervorgerufen wird.

Ein Vorteil der Erfindung ist, dass die Indikatorsubstanzen wahlweise vorab in Komponenten integriert werden können, also beispielsweise auf Kabel vor deren Installation aufgesprüht oder einem Ummantelungsmaterial zugegeben werden können, als auch nachträglich auf fertige Installationen aufgebracht werden können. Besonders im letzteren Fall kann eine gute flächenhafte Abdeckung mit der Indikatorsubstanz erreicht werden.

Beispiele für die oben genannte Verwendung von chromogenen Glykosiden in der Enzymologie bzw. Mikrobiologie sind in AU1999/021679: Use of Indolamine Derivatives for Detecting Micro-organism Peptidase, EP0900230B1 Esculetin Derivatives, EP3066209B1 Aus Naphthalin gewonnene Chromogene Enzymsubstrate, US7563592B2 Alizarin-based Chromogenic Substrates, their Uses and Composition containing same, WO1999/050438A3_19991125 Chromogenic Indole Derivatives und James et al, 1997 Note: Cyclohexenoesculetin-b-D-glucoside: a new substrate for the detection of bacterial b-D-glucosidase Journal of Applied Microbiology 1997, 82, 532-536 gezeigt. Hierbei ist aber beispielsweise die irreversible Spaltung mittels Pyrolyse nicht betrachtet worden.

Weiterhin bevorzugt ist die chromogene Indikatorsubstanz ausgewählt aus Glykosiden von Phenol und seinen Derivaten, Anthrachinon und seinen Derivaten, Hydrochinon und seinen Derivaten, Benzopyronen und ihren Derivaten, Naphthochinon und seinen Derivaten; oder
ist die chromogene Indikatorsubstanz ausgewählt aus Glykosiden von Nitrophenolen, bevorzugt aus 4-Nitrophenyl-β-D-glukosid, 4-Nitrophenyl-β-D-galaktosid, 2-Nitrophenol-ß-D-glukosid oder 3-Nitrophenol-ß-D-glukosid; oder
ist die chromogene Indikatorsubstanz ausgewählt aus Alizarinderivat-Glykosiden, bevorzugt Ryberythrinsäure-Glykosid, bevorzugter 1,2-Dihydroxyanthrachinon-primverosid; oder
ist die chromogene Indikatorsubstanz ausgewählt aus Glykosiden von Cumarin und seinen Derivaten, bevorzugt aus 6,7-Dihydroxycumarin-6-O-ß-D-glukosid, 3,4-Cyclohexenoaesculetin-7-ß-D-glukosid, 7-Hydroxycumarin-7-O-ß-D-glukosid oder 4-Methylumbelliferon-7-O-ß-D-glukosid; oder
ist die chromogene Indikatorsubstanz ausgewählt aus Glykosiden der reduzierten Formen von Jugion (5-Hydroxy-1,4-naphthochinon), Lawson (2-Hydroxy-1,4-naphthochinon) und Plumbagin (5-Hydroxy-2-methiyl-1,4-naphthochinon), bevorzugt aus 1, 4, 5 Trihydroxynaphthalin-4-O-ß-D-glukosid.

Weiterhin bevorzugt ist die chromogene Indikatorsubstanz ausgewählt aus Hennosiden und/oder Sennosiden.

1,2-Dihydroxyanthrachinon-primverosid setzt Alizarin frei, welches mit Metallsalzen Krapplacke bilden kann.

6,7-Dihydroxycumarin-6-O-ß-D-glukosid setzt Aesculetin (6,7-Dihydroxycumarin) frei, welches mit Fe(II)-Salzen grün bis schwarz gefärbte Komplexe bildet.

7-Hydroxycumarin-7-O-ß-D-IGukosid oder 4-Methylumbelliferon-7-O-ß-D-glukosid setzen Umbelliferon bzw. 4-Methylumbelliferon frei, welche, auch mit Metallionen (vor allem Cu²⁺ und Ca²⁺), eine Fluoreszenz zeigen.

Weiterhin bevorzugt ist die chromogene Indikatorsubstanz ausgewählt aus Saligenin-O-ß-D-glukosid (Salicin), Acetylsalicylsäure oder 4-Nitrophenylacetat; oder
ist die chromogene Indikatorsubstanz ausgewählt aus Glykosiden, Sulfaten und/oder Phosphaten von indigoiden Verbindungen, bevorzugt Indoxyl-O-ß-D-glukosid (Indican), Indoxylphosphat und/oder Indoxylsulfat; oder
ist die chromogene Indikatorsubstanz ausgewählt aus halogenierten, pseudohalogenierten, alkylierten, acylierten, hydroxylierten, nitrierten, heteroanalogen oder anderweitig substituierten Indoxylderivaten als glykosidische Farbstoffvorstufen.

Saligenin-O-ß-D-glukosid oder Salicylsäureacetat (Acetylsalicylsäure) setzen Saligenin (2-(Hydroxymethyl)phenol) bzw. dessen Säure Salicylsäure frei, welche jeweils mit Fe²⁺, Fe³⁺ oder anderen Übergangsmetallionen gefärbte Chelate bildet. Indoxyl-O-ß-D-glukosid (Pflanzen-Indican) setzt Indoxyl frei, weiches zu blauem Indigo luft-oxidiert.

Indoxylphosphat und Indoxylsulfat (Harn-Indican, Uroxanthin) setzen Indoxyl frei, welches zu blauem Indigo luft-oxidiert.

Halogenierte, pseudohalogenierte, alkylierte, acylierte, hydroxylierte, nitrierte, heteroanaloge (beispielsweise Thioindoxyl- und Oxindigo-Vorläufer, Indolamin) oder anderweitig substituierte Indoxylderivate als glykosidische Farbstoffvorstufen setzen entsprechende Indoxyl-Derivate frei, die verschieden gefärbte Indigofarbstoffe bilden. Hierbei müssen keine Metallionen verwendet werden, die Farbe entsteht ohne weitere Zusätze durch Luftoxidation nach Abspaltung des Aglykons.

Die Menge des aufgebrachten chromogenen Indikatorsubstanz kann daran angepasst werden, ob eine Erhitzung der technischen Einrichtung punktuell oder flächig zu erwarten ist, derart, dass die durch die Erhitzung im zu erwartenden Bereich freisetzbare Gesamtmenge an farbigem oder fluoreszierendem Spaltprodukt ausreichend ist, so dass ein detektierbarer Schwellenwert überschritten werden kann und ein Farb- und/oder Fluoreszensignal ausgelöst werden kann. Eine entsprechende angepasste Verteilung kann beispielsweise erreicht werden durch entsprechende Einstellung der Konzentration der chromogenen Indikatorsubstanz in einer Lösung bzw. Flüssigkeit oder in einem Aerosol oder Spray oder einer auftragbaren Folie, etwa ein Aufkleber, die oder das zur Aufbringung verwendet wird, und/oder durch gezielte und/oder mehrfachen Auftragung dieser Lösung. Beispielsweise kann die chromogene Indikatorsubstanz in einer Konzentration von 1 - 1000000 ppm, bevorzugt 10 - 100000 ppm, z.B. ungefähr 50000 ppm aufgetragen werden.

Weiterhin bevorzugt wird die chromogene Indikatorsubstanz als Aerosol, Spray, in Lösung oder in Pulverform aufgebracht oder eingebracht, bevorzugt als Aerosol, Spray oder in Lösung, wobei als Lösungsmittel bevorzugt ein organisches Lösungsmittel, beispielsweise Ethanol, Ethylacetat, Methanol, Aceton, Dimethylsulfoxid, Dimethylformamid, Ethylenglykolmonomethylether, Isopropanol, oder eine Mischung davon, oder Wasser, bevorzugt ein organisches Lösungsmittel, beispielsweise Ethanol, Ethylacetat, Methanol, Aceton, Dimethylsulfoxid, Dimethylformamid, Ethylenglykolmonomethylether, Isopropanol, oder eine Mischung davon verwendet wird. Vorzugweise umfasst das Lösungsmittel keine Elektrolyte.

Gemäß der vorliegenden Erfindung wird zusätzlich eine olfaktorische Indikatorsubstanz auf die Einrichtung oder deren Komponenten aufgebracht oder eine olfaktorische Indikatorsubstanz der Ummantelung beigefügt; und/oder wird die olfaktorische Indikatorsubstanz gleichzeitig mit der chromogenen Indikatorsubstanz aufgebracht.

Besonders vorteilhaft ist die Möglichkeit zur gleichzeitigen Aufbringung mit Glykosiden, die bei Überhitzung olfaktorische Warngerüche freisetzen, in nur einem Verfahrensschritt. Bei parallelem Einsatz beider Arten von Indikatorsubstanzen (zur Warnung und zur Lokalisation) funktioniert auch die Freisetzung von Warngeruch und Farbe nach einem sehr ähnlichen chemischen Mechanismus und bei ähnlichen Temperaturen, was eine gewünschte technische Vereinfachung darstellt. Mit diesem Temperaturbereich findet bei Kombination der Methoden sowohl die Warnung als auch die Lokalisierungsmöglichkeit in einem Bereich statt, bei dem die Möglichkeit besteht, dass noch keine größeren Schäden an der Installation aufgetreten sind, und bei dem es in der Regel noch nicht zum Brand kommen kann. Trotz des irreversiblen Typs der Thermochrome, sowie der Warngeruchglykoside, besteht die Möglichkeit nach einem solchen Schadensfall beide Typen von Glykosiden erneut und nachträglich flächenhaft aufzubringen, um beide Schutzeffekte zu erneuern.

Bevorzugt ist die olfaktorische Indikatorsubstanz bei einer Temperatur größer oder gleich 50°C, bevorzugt größer oder gleich 60°C, bevorzugter größer oder gleich 70°C, und noch bevorzugter größer oder gleich 80°C spaltbar, bevorzugt irreversibel spaltbar, bevorzugter pyrolysierbar; und/oder
ist die olfaktorische Indikatorsubstanz ausgewählt aus der Gruppe, bestehend aus einem Glykosid, Ester, Thioester, Ether, Thioether, Amid, Acetal, Halbacetal, Carbamat und/oder Kombinationen daraus, bevorzugt ausgewählt aus einem Glykosid, bevorzugter ausgewählt aus einem N-Glukosid, S-Glukosid, O-Glukosid und/oder Kombinationen daraus, wobei das Glykosid bevorzugt ein Mono- oder Oligoglykosid ist; und/oder
wird die chromogene Indikatorsubstanz und/oder die olfaktorische Indikatorsubstanz mit einer auftragbaren Folie, bevorzugt einem Aufkleber, optional mit einer nach Aufbringung abziehbarer Schutzfolie, aufgebracht; und/oder
werden die chromogene Indikatorsubstanz und die olfaktorische Indikatorsubstanz zusammen mit einem Hilfsstoff aufgebracht, der eine enzymatische Spaltung oder einen Abbau durch Mikroorganismen der chromogenen Indäkatorsubstanz und/oder der olfaktorischen Indikatorsubstanz hemmt oder verhindert.

Weiterhin bevorzugt ist die olfaktorische Indikatorsubstanz bei einer Temperatur kleiner oder gleich 900°C, bevorzugt kleiner oder gleich 500°C, bevorzugter kleiner oder gleich 300°C und noch bevorzugter kleiner oder gleich 250°C spaltbar, bevorzugt irreversibel spaltbar, bevorzugter pyrolysierbar.

Bei der olfaktorischen Indikatorsubstanz handelt es sich bevorzugt um Duftstoffe und deren Derivate. Die Auswahl sowohl der Duftstoffe als auch ihrer Derivate berücksichtigt hierbei vorzugsweise den Anspruch einer sehr niedrigen Toxizität, indem bevorzugt Duftstoffe aus dem Lebensmitteibereich ausgewählt werden. Weiterhin bevorzugt handelt es sich bei glykosidischen olfaktorischen Indikatorsubstanzen insbesondere um Glukosederviate, aber auch Galaktosederivate, Mannosederivate, Fruktosederivate und diese Kohlenhydratmonomere enthaltende Oligo- und Polysaccharide.

Bevorzugt ist die olfaktorische Indikatorsubstanz ausgewählt aus Glykosiden, insbesondere Glukosiden von Sotolon, Maple furanone, Maltol, Ethylmaltol, Furaneol, Homofuraneol, Norfuraneol, Eugenol, Terpineol, Thioterpineol, Thymol, 1-Octen-3-ol, und/oder 2-Furfurylthiol.

Weiterhin bevorzugt ist die olfaktorische Indikatorsubstanz ausgewählt aus Glykosiden, insbesondere Glukosiden von Raucharomen mit phenolischer Struktur wie beispielsweise Guajakol.

Als Duftstoffe treten somit beispielsweise Sotolon, Maple furanone, Maltol, Ethylmaltol, Furaneol, Homofuraneol, Norfuraneol, Eugenol, Terpineol, Thioterpineol, Thymol, 1- Octen-3-ol, und/oder 2-Furfurylthiol auf.

Als Duftstoffe können auch Raucharomen, insbesondere Raucharomen mit phenolischer Struktur wie beispielsweise Guajakol auftreten.

Vorzugsweise werden Duftstoffe ausgewählt, die einen sehr niedrigen Geruchsschwellenwert besitzen und/oder in der Umgebung der technischen Einrichtung normalerweise nicht zu erwarten waren. So weist beispielsweise Sotolon, der Geruchsstoff des "Maggikrautes" (Liebstockel, *Levisticum officinale),* einen Geruchschwellenwert von nur 0,02 ng/L Luft auf (Konig et al. 1999, J. Agric. Food Chem. 1999, 47, 3288-3291).

Vorzugsweise wird die olfaktorische Indikatorsubstanz zusammen mit einem Hilfsstoff aufgebracht, der eine enzymatische Spaltung oder einen Abbau durch Mikroorganismen der olfaktorischen Indikatorsubstanz hemmt oder verhindert, beispielsweise Parabene (Ester der para-Hydroxybenzoesaure).

In einer Ausführungsform ist das erfindungsgemäße Verfahren ein Verfahren, bei dem eine durch Überhitzung gefährdete technische Einrichtung (z.B. elektrische Installationen, Röhren für Gase oder Flüssigkeiten), oder vorab deren Komponenten, mit Glykosiden (O-, N-, S-Glykoside, jeweils alpha- oder beta-Anomere), im Einzelfall auch ersatzweise einem entsprechenden Acetat, Phosphat oder Sulfat, als chromogene Indikator-Substanz flächendeckend beschichtet wird oder einer Ummantelung beigefügt wird. Die Indikatorsubstanzen können dabei in einem Substanzgemisch mit Hilfssubstanzen (beispielsweise Übergangsmetallsalze, Säuren oder Lewissäuren zur Veränderung der Pyrolysetemperatur, Säuren oder Basen, Salze, Trägerstoffe und solche zur Immobilisierung)) enthalten sein. Bei Überschreiten einer kritischen Temperatur werden die chromogenen Glykoside pyrolytisch und damit irreversibel gespalten, so dass sich die Farbe und/ oder eine Fluoreszenz so auffällig ändern, dass der überhitzte Bereich während und besonders auch nach der Überhitzung durch Augenschein, im Fall der Fluoreszenz unter speziellen Lichtverhältnissen, deutlich zu erkennen ist und die Schadstelle somit direkt lokalisiert werden kann. Die Farbe oder Fluoreszenz des aus dem Glykosid abgespaltenen Aglykons kann dabei direkt entstehen, oder durch Folgereaktion(en), auch mit eventuellen Hilfssubstanzen und/oder Luftsauerstoff, entstehen.

In dieser Ausführungsform sind mögliche Indikatorsubstanzen für das Verfahren vorzugsweise Glykoside von Nitrophenolen, wie sie auch zur Bestimmung von Glucosidase- oder Esterase-Enzymaktivitäten verwendet werden, beispielsweise 4-Nitrophenyl-ß-D-glucosid, 4-Nitrophenyl-β-D-galactosid, auch 4-Nitrophenyl-β-D-acetat, sowie 2- und 3-Nitrophenol-β-D-Glukosid.

Vorzugsweise werden folgende Glykoside von Phenolen und Hydrochinonen verwendet, darunter besonders:
Ryberythrinsäure (1,2-Dihydroxyanthrachinon-primverosid, setzt Alizarin frei welches mit Metallsalzen Krapplacke bilden kann) und andere Alizarinderivat-Glykoside;
Aesculin (6,7-Dihydroxycumarin-6-O-ß-D-glukosid, setzt Aesculetin (6,7-Dihydroxycumarin) frei, welches mit Fe(II)-Salzen grün bis schwarz gefärbte Komplexe bildet) oder 3,4-Cyclohexenoaesculetin-7-ß-D-glucosid;
Umbelliferon-7-O-ß-D-Glukosid (7-Hydroxycumarin-7-O-ß-D-Glukosid) oder 4-Methylumbelliferon-7-O-ß-D-Glukosid (setzen Umbelliferon bzw. 4-Methylumbelliferon frei, weiche, auch mit Metallionen (v.a. Cu²⁺ und Ca²⁺), eine Fluoreszenz zeigen);
Glukoside der reduzierten Formen von Juglon, Lawson und Plumbagin, im Fall von Juglon bevorzugt das 1, 4, 5 Trihydroxynaphthalin-4-O-Glukosid;
Salicin (Saligenin-O-ß-D-glukosid) oder Salicylsäureacetat (Acetylsalicylsäure) (setzen Saligenin (2-(Hydroxymethyl)phenol) bzw. dessen Säure Salicylsäure frei, welche jeweils mit Fe²⁺, Fe³⁺ oder anderen Übergangsmetallionen gefärbte Chelate bildet).

Ebenfalls bevorzugt sind Glykoside, aber auch entsprechende Sulfate und Phosphate, von indigoiden Verbindungen, daraus ausgewählt besonders:
Indican (Indoxyl-O-ß-D-glukosid, Pflanzen-Indican), (setzt Indoxyl frei, welches zu blauem Indigo luft-oxidiert);
Indoxylphosphat und Indoxylsulfat (Harn-Indican, Uroxanthin) (setzen Indoxyl frei, welches zu blauem Indigo luft-oxidiert);
Halogenierte, pseudohalogenierte, alkylierte, acylierte, hydroxylierte, nitrierte, heteroanaloge (beispielsweise Thioindoxyl- und Oxindigo-Vorläufer, Indolamin) oder anderweitig substituierte Indoxylderivate als glykosidische Farbstoffvorstufen (setzen entsprechende Indoxyl-Derivate frei, die verschieden gefärbte Indigofarbstoffe bilden). Weiter bevorzugt sind auch Pflanzenextrakte in verschiedenen Reinheitsgraden, welche die beanspruchten Glykoside enthalten, die bei Erhitzung durch Pyrolyse Farben bilden oder ihre Fluoreszenzeigenschaften verändern.

Bevorzugt werden auch Glykoside verwendet, welche besonders vorteilhaft biotechnologisch durch Glykosylierung aus den entsprechend Aglyka hergestellt werden können. Besonders bevorzugt sind dabei wiederum die Glukoside.

Besonders bevorzugt ist das Verfahren in Kombination mit einem olfaktorischen Überhitzungsschutz durch weitere aufgebrachte und der olfaktorischen Signalgebung bei Überhitzung dienenden Glukosiden von Warngeruchsstoffen, so dass bei Überhitzung der Schadensfall zunächst ohne Augenschein olfaktorisch wahrgenommen und danach durch Augenschein sofort, aber auch noch nach Abkühlung der Installation, genau lokalisiert werden kann. In einem speziell bevorzugten Verfahren werden die Glykoside für zur Lokalisierung von Überhitzungsschäden und die für den olfaktorischen Überhitzungsschutz gleichzeitig und, hierfür vorteilhaft, mit einer alle verwendeten Glykoside (oder im Einzelfall auch entsprechende Acetate, Phosphate, Sulfate) enthaltenden Lösung oder Mischung aufgebracht oder in Ummantelungen eingebracht. Sie werden im Falle der Überhitzung weiter vorteilhaft nach einem ähnlichen Mechanismus und bei ähnlichen Temperaturen gespalten.

Ein weiterer Gegenstand der Erfindung betrifft einen Artikel umfassend eine chromogene und eine olfaktorische Indikatorsubstanz, wobei die chromogene indikatorsuhsianz ausgewählt ist aus einem Ester, Thioester, Ether, Thioether, Amid, Acetal, Halbacetal, Carbamat, Glykosid und/oder Kombinationen daraus, bevorzugt ausgewählt aus einem Glykosid, Acetat, Sulfat, Phosphat und/oder Kombinationen daraus, bevorzugter ausgewählt aus einem Glykosid, noch bevorzugter ausgewählt aus einem N-Glykosid, O-Glykosid, S-Glykosid und/oder Kombination daraus, wobei das Glykosid ein alpha- oder beta- Anomer ist; wobei die chromogene Indikatorsubstanz bei einer Temperatur größer oder gleich 50°C und kleiner oder gleich 300°C, bevorzugt größer oder gleich 60°C, bevorzugter größer oder gleich 70°C, noch bevorzugter größer oder gleich 80°C irreversibel spaltbar, bevorzugt pyrolysierbar, ist; und wobei wenigstens ein Spaltprodukt, bevorzugt wenigstens ein Pyrolyseprodukt, der chromogenen Indikatorsubstanz ein von der chromogenen Indäkatorsubstanz verschiedenes Absorptionsspektrum im sichtbaren Bereich oder eine von der chromogenen indikatorsubstanz verschiedene Fluoreszenz aufweist.

Der erfindungsgemäße Artikel ist in Anspruch 7 definiert.

Die oben gemachten Angaben zum erfindungsgemäßen Verfahren, insbesondere zur chromogenen und olfaktorischen Indikatorsubstanz sowie den Hilfssubstanzen, haben entsprechend auch für den erfindungsgemäßen Artikel Geltung.

Bevorzugt ist die chromogene Indikatorsubstanz ausgewählt aus Acetat, Phosphat, Sulfat und/oder Kombinationen daraus; und/oder
ist die chromogene Indikatorsubstanz bevorzugt in einem Substanzgemisch mit Hilfssubstanzen enthalten, bevorzugt sind die Hilfssubstanzen Übergangsmetallsalze, Brönstedtsäuren, Lewissäuren, Säuren oder Basen, Salze, Trägerstoffe und solche zur Immobilisierung und/oder Kombinationen hieraus, bevorzugt sind Lewissäuren; und/oder
ist die chromogene Indikatorsubstanz ein aus Pflanzenxtraktion gewonnenes Glykosid, bevorzugt ein aus Pflanzenextraktion gewonnenes N-Glykosid, O-Glykosid, S- Glykosid und/oder Kombinationen daraus; und/oder
ist die chromogene indikatorsubstanz ein bäotechnologisch hergestelites Glykosid, bevorzugt ein biotechnologisch hergestelltes N-Glykosid, O-Glykosid, S-Glykosid und/oder Kombinationen daraus.

Weiterhin bevorzugt umfasst der Artikel eine olfaktorische Indikatorsubstanz, wobei die olfaktorische Indikatorsubstanz bei einer Temperatur größer oder gleich 50°C, bevorzugt größer oder gleich 60°C, bevorzugter größer oder gleich 70°C, noch bevorzugter größer oder gleich 80°C irreversibel spaltbar, bevorzugt pyrolysierbar, ist; und/oder
wobei die olfaktorische Indikatorsubstanz bevorzugt in einem Substanzgemisch mit Hilfssubstanzen enthalten ist, bevorzugt sind die Hilfssubstanzen ausgewählt aus

Übergangsmetallsalzen, Brönstedtsäuren, Lewissäuren, Basen, Salzen, Trägerstoffen, Hilfsstoffen zur Immobilisierung und/oder Kombinationen daraus. Bevorzugt ist der Artikel eine Folie, ein Aufkleber oder eine Auftragevorrichtung, bevorzugt eine Folie oder ein Aufkleber.

Ein weiterer Gegenstand der Erfindung betrifft eine Zusammensetzung umfassend eine chromogene und eine olfaktorische Indikatorsubstanz, wobei die chromogene Indikatorsubstanz ausgewählt ist aus einem Ester, Thioester, Ether, Thioether, Amid, Acetal, Halbacetal, Carbamat, Glykosid und/oder Kombinationen daraus, bevorzugt ausgewählt aus einem Glykosid, Acetat, Sulfat, Phosphat und/oder Kombinationen daraus, bevorzugter ausgewählt aus einem Glykosid, noch bevorzugter ausgewählt aus einem N-Glykosid, O-Glykosid, S-Glykosid und/oder Kombination daraus, wobei das Glykosid ein alpha- oder beta-Anomer ist; wobei die chromogene Indikatorsubstanz bei einer Temperatur größer oder gleich 50°C, bevorzugt größer oder gleich 60°C, bevorzugter größer oder gleich 70°C, noch bevorzugter größer oder gleich 80°C irreversibel spaltbar, bevorzugt pyrolysierbar, ist; und wobei wenigstens ein Spaltprodukt, bevorzugt wenigstens ein Pyrolyseprodukt, der chromogenen Indikatorsubstanz ein von der chromogenen Indikatorsubstanz verschiedenes Absorptionsspektrum im sichtbaren Bereich oder eine von der chromogenen Indikatorsubstanz verschiedene Fluoreszenz aufweist.

Die erfindungsgemäße Zusammensetzung ist in Anspruch 10 definiert.

Die oben gemachten Angaben zum erfindungsgemäßen Verfahren und erfindungsgemäßen Artikel, insbesondere zur chromogenen und olfaktorischen Indikatorsubstanz sowie den Hilfssubstanzen, haben entsprechend auch für die erfindungsgemäße Zusammensetzung Geltung.

Bevorzugt umfasst die Zusammensetzung wenigstens eine Hilfssubstanz ausgewählt aus Übergangsmetallsalzen, Brönstedtsäuren, Lewissäuren, Säuren, Basen, Salze, Trägerstoffen, Hilfsstoffen zur Immobilisierung und/oder Kombinationen daraus, bevorzugt Brönstedtsäuren oder Lewissäuren, bevorzugter Lewissäuren; und/oder ist die chromogene Indikatorsubstanz ein Glykosid, bevorzugt ein N-Glykosid, O-Glykosid, S-Glykosid und/oder Kombinationen, welches in einem Pflanzenextrakt vorliegt; oder
ist die chromogene Indikatorsubstanz ein biotechnologisch hergestelltes Glykosid, bevorzugt ein biotechnologisch hergestelltes N-Glykosid, O-Glykosid, S-Glykosid und/oder Kombinationen; und/oder
umfasst die Zusammensetzung eine olfaktorische Indikatorsubstanz, wobei die olfaktorische Indikatorsubstanz ausgewählt ist aus der Gruppe, bestehend aus einem Glykosid, Ester, Thioester, Ether, Thioether, Amid, Acetal, Halbacetal, Carbamat und/oder Kombinationen daraus, bevorzugt aus Glykosid, bevorzugter ausgewählt aus N-Glukosid, S-Glukosid, O-Glukosid und/oder Kombinationen daraus, und wobei das Glykosid bevorzugt ein Mono- oder Oligoglykosid ist.

Ein weiterer Gegenstand der Erfindung betrifft die Verwendung der erfindungsgemäßen Zusammensetzung als Detektor, bevorzugt als Detektor für Wärmeentwicklung und/oder für elektromagnetische Strahlung.

Die oben gemachten Angaben zum erfindungsgemäßen Verfahren, dem erfindungsgemäßen Artikel und der erfindungsgemäßen Zusammensetzung, insbesondere zur chromogenen und olfaktorischen Indikatorsubstanz sowie den Hilfssubstanzen, haben entsprechend auch für die erfindungsgemäße Verwendung Geltung.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Weitere Vorteile der Erfindung ergeben sich aus der nachfolgenden Beschreibung von bevorzugten Ausführungsbeispielen, die jedoch in keiner Weise als einschränkend zu verstehen sind.

### Ausführungsbeispiele

### Materialien

Acetylsalicylsäure (ASS 500) wurde von der Firma ratiopharm (Deutschland) bezogen. Indican (I3750) wurde von der Firma Sigma-Aldrich bezogen.

Methanol wurde von der Firma Carl Roth GmbH (Deutschland) bezogen.

Fe(SO)₄ x 7 H₂O wurde von der Firma Alfaaesar bezogen.

### Erfindungsgemäßes Beispiel 1

Jeweils 1 mg Indoxyl-O-ß-D-glukosid (Pflanzenindican) in je 100 µL Methanol wurde auf verschiedene Oberflächen aufgebracht und darauf getrocknet: ein weißes Kabel, Alufolie, einen weißen 220V-Stecker, Papier. Die flächigen Objekte (Alufolie, Papier) wurden auf einer Heizplatte, die anderen Objekte mit einem Heißgebläse (1400 W) auf ca. 150°C erhitzt. Es wird jeweils eine Verfärbung sichtbar, auf dem Stecker ist diese braun, auf allen anderen Objekten blau durch Indigobildung.

### Erfindungsgemäßes Beispiel 2

Eine Spatelspitze Salicylsäureacetat (Acetylsalicylsäure) wurde mit einer Spatelspitze FeSO₄ x 7 H₂O gemörsert und das Gemisch dann auf einer Metallplatte auf ca. 150°C erhitzt. Es findet sofort eine tiefbraune Verfärbung statt.

### Vergleichsbeispiel 1

Eine Spatelspitze Salicylsäureacetat (Acetylsalicylsäure) wurde auf einer Metallplatte auf ca. 150°C erhitzt. Eine Verfärbung konnte nicht festgellt werden.

## Patentansprüche

1. Verfahren zum Versehen einer technischen Einrichtung mit einem Warnsignal gegenüber Erhitzung,
wobei eine chromogene Indikatorsubstanz auf eine Einrichtung oder deren Komponenten aufgebracht wird oder eine chromogene Indikatorsubstanz einer Ummantelung beigefügt wird;
wobei die chromogene Indikatorsubstanz ausgewählt ist aus einem Ester, Thioester, Ether, Thioether, Amid, Acetal, Halbacetal, Carbamat, Glykosid und/oder Kombinationen daraus;
wobei die chromogene Indikatorsubstanz bei einer Temperatur größer oder gleich 50°C und kleiner oder gleich 300°C irreversibel spaltbar ist; und
wobei wenigstens ein Spaltprodukt der chromogenen Indikatorsubstanz ein von der chromogenen Indikatorsubstanz verschiedenes Absorptionsspektrum im sichtbaren Bereich oder eine von der chromogenen Indikatorsubstanz verschiedene Fluoreszenz aufweist;
wobei zusätzlich eine olfaktorische Indikatorsubstanz auf die Einrichtung oder deren Komponenten aufgebracht wird oder eine olfaktorische Indikatorsubstanz der Ummantelung beigefügt wird.

2. Verfahren nach Anspruch 1,
wobei die chromogene Indikatorsubstanz ausgewählt ist aus einem Glykosid, Acetat, Sulfat, Phosphat und/oder Kombinationen daraus, bevorzugt ausgewählt aus einem Glykosid, bevorzugter ausgewählt aus einem N-Glykosid, O-Glykosid, S-Glykosid und/oder Kombination daraus, wobei das Glykosid ein alpha- oder beta-Anomer ist; und/oder
wobei die chromogene Indikatorsubstanz bei einer Temperatur größer oder gleich 60°C, bevorzugt größer oder gleich 70°C irreversibel spaltbar, bevorzugt pyrolisierbar, ist; und/oder
wobei die chromogene Indikatorsubstanz in einem Substanzgemisch mit Hilfssubstanzen enthalten ist, bevorzugt sind die Hilfssubstanzen ausgewählt aus Übergangsmetallsalzen, Brönstedtsäuren, Lewissäuren, Basen, Salzen, Trägerstoffen und Stoffen zur Immobilisierung und/oder Kombinationen hieraus, bevorzugter Lewissäuren; und/oder
wobei die chromogene Indikatorsubstanz mittels Streichen, Sprühen oder eines Immobilisierungsmittels aufgebracht wird; und/oder
wobei die chromogene Indikatorsubstanz ausgewählt ist aus Acetat, Phosphat, Sulfat und/oder Kombinationen daraus.

3. Verfahren gemäß einem der vorhergehenden Ansprüche,
wobei die chromogene Indikatorsubstanz ausgewählt ist aus Glykosiden von Phenol und seinen Derivaten, Anthrachinon und seinen Derivaten, Hydrochinon und seinen Derivaten, Benzopyronen und ihren Derivaten, Naphthochinon und seinen Derivaten; oder
wobei die chromogene Indikatorsubstanz ausgewählt ist aus Glykosiden von Nitrophenolen, bevorzugt aus 4-Nitrophenyl-β-D-glukosid, 4-Nitrophenyl-β-D-galaktosid, 2-Nitrophenol-ß-D-glukosid oder 3-Nitrophenol-ß-D-glukosid; oder
wobei die chromogene Indikatorsubstanz ausgewählt ist aus Alizarinderivat-Glykosiden, bevorzugt Ryberythrinsäure-Glykosid, bevorzugter 1,2-Dihydroxyanthrachinon-primverosid; oder
wobei die chromogene Indikatorsubstanz ausgewählt ist aus Glykosiden von Cumarin und seinen Derivaten, bevorzugt aus 6,7-Dihydroxycumarin-6-O-ß-D-glukosid, 3,4-Cyclohexenoaesculetin-7-ß-D-glukosid, 7-Hydroxycumarin-7-O-ß-D-glukosid oder 4-Methylumbelliferon-7-O-ß-D-glukosid; oder
wobei die chromogene Indikatorsubstanz ausgewählt ist aus Glykosiden der reduzierten Formen von Juglon, Lawson und Plumbagin, bevorzugt aus 1, 4, 5 Trihydroxynaphthalin-4-O-ß-D-glukosid.

4. Verfahren gemäß Anspruch 1 oder 2,
wobei die chromogene Indikatorsubstanz ausgewählt ist aus Saligenin-O-ß-D-glukosid (Salicin), Acetylsalicylsäure oder 4-Nitrophenylacetat; oder
wobei die chromogene Indikatorsubstanz ausgewählt ist aus Glykosiden, Sulfaten und/oder Phosphaten von indigoiden Verbindungen, bevorzugt Indoxyl-O-ß-D-glukosid (Indican), Indoxylphosphat und/oder Indoxylsulfat; oder
wobei die chromogene Indikatorsubstanz ausgewählt ist aus halogenierten, pseudohalogenierten, alkylierten, acylierten, hydroxylierten, nitrierten, heteroanalogen oder anderweitig substituierten Indoxylderivate als glykosidischen Farbstoffvorstufen.

5. Verfahren gemäß einem der vorhergehenden Ansprüche,
wobei die olfaktorische Indikatorsubstanz ausgewählt ist aus Glukosiden von Sotolon, Maple furanone, Maltol, Ethylmaltol, Furaneol, Homofuraneol, Norfuraneol, Eugenol, Terpineol, Thioterpineol, Thymol, 1-Octen-3-ol, und/oder 2-Furfurylthiol; und/oder
wobei die olfaktorische Indikatorsubstanz gleichzeitig mit der chromogenen Indikatorsubstanz aufgebracht wird.

6. Verfahren gemäß Anspruch 5,
wobei die olfaktorische Indikatorsubstanz bei einer Temperatur größer oder gleich 50°C, bevorzugt größer oder gleich 60°C, bevorzugter größer oder gleich 70°C spaltbar, bevorzugt irreversibel spaltbar, bevorzugter pyrolisierbar, ist; und/oder
wobei die olfaktorische Indikatorsubstanz ausgewählt ist aus der Gruppe, bestehend aus einem Glykosid, Ester, Thioester, Ether, Thioether, Amid, Acetal, Halbacetal, Carbamat und/oder Kombinationen daraus, bevorzugt ausgewählt aus einem Glykosid, bevorzugter ausgewählt aus einem N-Glukosid, S-Glukosid, O-Glukosid und/oder Kombinationen daraus, wobei das Glykosid bevorzugt ein Mono- oder Oligoglykosid ist; und/oder
wobei die chromogene Indikatorsubstanz und/oder die olfaktorische Indikatorsubstanz mit einer auftragbaren Folie, bevorzugt einem Aufkleber aufgebracht wird; und/oder
wobei die chromogene Indikatorsubstanz und/oder die olfaktorische Indikatorsubstanz zusammen mit einem Hilfsstoff aufgebracht werden, der eine enzymatische Spaltung oder einen Abbau durch Mikroorganismen der chromogenen Indikatorsubstanz und/oder der olfaktorischen Indikatorsubstanz hemmt oder verhindert.

7. Artikel umfassend
eine chromogene Indikatorsubstanz,
wobei die chromogene Indikatorsubstanz ausgewählt ist aus einem Ester, Thioester, Ether, Thioether, Amid, Acetal, Halbacetal, Carbamat, Glykosid und/oder Kombinationen daraus;
wobei die chromogene Indikatorsubstanz bei einer Temperatur größer oder gleich 50°C und kleiner oder gleich 300°C irreversibel spaltbar ist; und
wobei wenigstens ein Spaltprodukt der chromogenen Indikatorsubstanz ein von der chromogenen Indikatorsubstanz verschiedenes Absorptionsspektrum im sichtbaren Bereich oder eine von der chromogenen Indikatorsubstanz verschiedene Fluoreszenz aufweist;
eine olfaktorische Indikatorsubstanz, und
wobei der Artikel eine Folie, ein Aufkleber oder eine Auftragevorrichtung ist.

8. Artikel gemäß Anspruch 7,
wobei die chromogene Indikatorsubstanz ausgewählt ist aus einem Glykosid, Acetat, Sulfat, Phosphat und/oder Kombinationen daraus, bevorzugt ausgewählt aus einem Glykosid, bevorzugter ausgewählt aus einem N-Glykosid, O-Glykosid, S-Glykosid und/oder Kombination daraus, wobei das Glykosid ein alpha- oder beta-Anomer ist; und/oder
wobei die chromogene Indikatorsubstanz ausgewählt ist aus Acetat, Phosphat, Sulfat und/oder Kombinationen daraus; und/oder
wobei die chromogene Indikatorsubstanz in einem Substanzgemisch mit Hilfssubstanzen enthalten ist, bevorzugt sind die Hilfssubstanzen Übergangsmetallsalze, Brönstedtsäuren, Lewissäuren, Säuren oder Basen, Salze, Trägerstoffe und solche zur Immobilisierung und/oder Kombinationen hieraus, bevorzugt sind Lewissäuren; und/oder
wobei die chromogene Indikatorsubstanz ein aus Pflanzenxtraktion gewonnenes Glykosid, bevorzugt ein aus Pflanzenextraktion gewonnenes N-Glykosid, O-Glykosid, S-Glykosid und/oder Kombinationen daraus ist; und/oder
wobei die chromogene Indikatorsubstanz ein biotechnologisch hergestelltes Glykosid, bevorzugt ein biotechnologisch hergestelltes N-Glykosid, O-Glykosid, S-Glykosid und/oder Kombinationen daraus ist.

9. Artikel gemäß Ansprüchen 7 und 8,
wobei die olfaktorische Indikatorsubstanz ausgewählt ist aus Glykosiden, insbesondere Glukosiden von Sotolon, Maple furanone, Maltol, Ethylmaltol, Furaneol, Homofuraneol, Norfuraneol, Eugenol, Terpineol, Thioterpineol, Thymol, 1-Octen-3-ol, und/oder 2-Furfurylthiol; und/oder
wobei die olfaktorische Indikatorsubstanz bei einer Temperatur größer oder gleich 50°C, bevorzugt größer oder gleich 60°C, bevorzugter größer oder gleich 70°C irreversibel spaltbar, bevorzugt pyrolsierbar, ist; und/oder
wobei die olfaktorische Indikatorsubstanz in einem Substanzgemisch mit Hilfssubstanzen enthalten ist, bevorzugt sind die Hilfssubstanzen ausgewählt aus Übergangsmetallsalzen, Brönstedtsäuren, Lewissäuren, Basen, Salzen, Trägerstoffen, Hilfsstoffen zur Immobilisierung und/oder Kombinationen daraus.

10. Zusammensetzung umfassend
eine chromogene Indikatorsubstanz,
wobei die chromogene Indikatorsubstanz ausgewählt ist aus einem Ester, Thioester, Ether, Thioether, Amid, Acetal, Halbacetal, Carbamat, Glykosid und/oder Kombinationen daraus;
wobei die chromogene Indikatorsubstanz bei einer Temperatur größer oder gleich 50°C und kleiner oder gleich 300°C irreversibel spaltbar; und
wobei wenigstens ein Spaltprodukt der chromogenen Indikatorsubstanz ein von der chromogenen Indikatorsubstanz verschiedenes Absorptionsspektrum im sichtbaren Bereich oder eine von der chromogenen Indikatorsubstanz verschiedene Fluoreszenz aufweist,
eine olfaktorische Indikatorsubstanz,
wobei die olfaktorische Indikatorsubstanz ausgewählt ist aus der Gruppe, bestehend aus einem Glykosid, Ester, Thioester, Ether, Thioether, Amid, Acetal, Halbacetal, Carbamat und/oder Kombinationen daraus.

11. Zusammensetzung gemäß Anspruch 10,
wobei die Zusammensetzung wenigstens eine Hilfssubstanz ausgewählt aus Übergangsmetallsalzen, Brönstedtsäuren, Lewissäuren, Säuren, Basen, Salze, Trägerstoffen, Hilfsstoffen zur Immobilisierung und/oder Kombinationen daraus,
wobei die chromogene Indikatorsubstanz ein Glykosid, bevorzugt ein N-Glykosid, O-Glykosid, S-Glykosid und/oder Kombinationen ist, welches in einem Pflanzenextrakt vorliegt; oder
wobei die chromogene Indikatorsubstanz ein biotechnologisch hergestelltes Glykosid, bevorzugt ein biotechnologisch hergestelltes N-Glykosid, O-Glykosid, S-Glykosid und/oder Kombinationen ist; und/oder
wobei die olfaktorische Indikatorsubstanz ausgewählt ist aus der Gruppe, bestehend aus Glykosid, bevorzugt ausgewählt aus N-Glukosid, S-Glukosid,O-Glukosid und/oder Kombinationen daraus, und wobei das Glykosid bevorzugt ein Mono- oder Oligoglykosid ist.

12. Verwendung der Zusammensetzung gemäß Ansprüchen 10 oder 11 als Detektor, bevorzugt als Detektor für Wärmeentwicklung und für elektromagnetische Strahlung.

## Claims

1. Method of providing a technical device with a warning signal against overheating, wherein a chromogenic indicator substance on a device or their components is applied or a chromogenic indicator substance sheathing is applied; wherein the chromogenic indicator substance is selected from an ester, thioester, ether, thioether, amide, acetal, hemiacetal, carbamate, glycoside and/or combinations thereof; wherein the chromogenic indicator substance at a temperature greater than or equal to 50°C and less than or equal to 300°C is irreversibly cleavable; and wherein at least one cleavage product of the chromogenic indicator substance has an absorption spectrum in the visible range or a fluorescence which is different from the chromogenic indicator substance; in addition, an olfactory indicator substance on the device or its components is applied or an olfactory indicator substance is applied to the sheath.

2. Method according to claim 1, wherein the chromogenic indicator substance is selected from a glycoside, acetate, sulfate, phosphate and/or combinations, thereof preferably selected from a glycoside, more preferably selected from a N-glycoside, O-glycoside, S-glycoside and / or combination thereof, wherein the glycoside is an alpha or beta anomer; and / or wherein the chromogenic indicator substance is irreversibly cleavable, preferred pyrolyzable, at a temperature greater than or equal to 60°C, preferably greater than or equal to 70°C; and/or wherein the chromogenic indicator substance in a substance mixture with auxiliary substances is included, preferably the auxiliary substances are selected from transition metal salts, Bronsted acids, Lewis acids, bases, salts, carriers and substances for immobilization and / or combinations thereof, more preferably Lewis acids; and or wherein the chromogenic indicator substance by brushing, spraying or by a immobilizing agent is applied; and / or wherein the chromogenic indicator substance is selected from acetate, phosphate, sulfate and/or combinations thereof.

3. Method according to one of the preceding claims, wherein the chromogenic indicator substance is selected from glycosides of phenol and its derivatives, anthraquinone and its derivatives, hydroquinone and its derivatives, benzopyrones and their derivatives, naphthoquinone and its derivatives; or wherein the chromogenic indicator substance is selected from glycosides of nitrophenols, preferably from 4-nitrophenyl-p-D-glucoside, 4-nitrophenyl-β-D-galactoside, 2-nitrophenol- β-D-glucoside or 3-nitrophenol-β-D-glucoside; or wherein the chromogenic indicator substance is selected from alizarin-derivative glycosides, preferably ryberythric acid glycoside, more preferably 1,2- dihydroxyanthraquinone primveroside; or wherein the chromogenic indicator substance is selected from glycosides of coumarin and its derivatives, preferably from 6,7-dihydroxycoumarin-6-O-β-D-glucoside, 3,4-cyclohexenoesculetin-7-β-D-glucoside, 7-hydroxycoumarin-7-O-β-D-glucoside or 4-methylumbelliferone-7-O-β-D-glucoside; or wherein the chromogenic indicator substance is selected from glycosides reduced forms of juglone, lawsone and plumbagin, preferably from 1, 4, 5-trihydroxynaphthalene-4-O-β-D-glucoside.

4. A method according to claim 1 or 2, wherein the chromogenic indicator substance is selected from saligenin-O-β-D-glucoside (salicin), acetylsalicylic acid or 4-nitrophenyl acetate; or wherein the chromogenic indicator substance is selected from glycosides, sulfates and / or phosphates of indigoid compounds, preferably indoxyl-O-β-D-glucoside (indican), indoxyl phosphate and / or indoxyl sulfate; or wherein the chromogenic indicator substance is selected from halogenated, pseudohalogenated, alkylated, acylated, hydroxylated, nitrated, heteroanalogous or otherwise substituted indoxyl derivatives as glycosidic dye precursors.

5. Method according to one of the preceding claims, wherein the olfactory indicator substance is selected from glucosides from sotolon, maple furanone, maltol, ethylmaltol, furaneol, homofuraneol, norfuraneol, eugenol, terpineol, thioterpineol, thymol, 1-octen-3-ol, and/or 2-furfurylthiol; and / or wherein the olfactory indicator substance simultaneously with the chromogenic Indicator substance is applied.

6. Method according to claim 5, wherein the olfactory indicator substance at a temperature greater than or equal to 50°C, preferably greater than or equal to 60°C, more preferably greater than or equal to 70°C is cleavable, preferably irreversibly cleavable, more preferably pyrolyzable; and or wherein the olfactory indicator substance is selected from the group consisting of a glycoside, ester, thioester, ether, thioether, amide, acetal, hemiacetal, carbamate and/or combinations thereof, preferably selected from a glycoside, more preferably selected from an N-glucoside, S-glucoside, O-glucoside and/or combinations thereof, wherein the glycoside is preferably a mono- or oligoglycoside; and / or wherein the chromogenic indicator substance and / or the olfactory indicator substance can be applied by a film, or preferably a sticker; and / or wherein the chromogenic indicator substance and / or the olfactory Indicator substance are applied together with an auxiliary substances, which inhibits or prevents enzymatic cleavage or degradation by microorganisms of the chromogenic indicator substance and/or the olfactory indicator substance.

7. Article comprising a chromogenic indicator substance, wherein the chromogenic indicator substance is selected from an ester, thioester, ether, thioether, amide, acetal, hemiacetal, carbamate, glycoside and / or combinations thereof; wherein the chromogenic indicator substance at a temperature greater than or equal to 50°C and less than or equal to 300°C is irreversibly cleavable; and wherein at least one cleavage product of the chromogenic indicator substance has a different absorption spectrum in the visible range from the chromogenic indicator substance or has a different fluorescence; an olfactory indicator substance, and wherein the article is a film, sticker or applicator.

8. Article according to claim 7, wherein the chromogenic indicator substance is selected from a glycoside, acetate, sulfate, phosphate and / or combinations thereof, preferably selected from a glycoside, more preferably selected from an N-glycoside, O-glycoside, S-glycoside and / or combinations thereof, wherein the glycoside is an alpha or beta anomer; and/or wherein the chromogenic indicator substance is selected from acetate, phosphate, sulfate and / or combinations thereof; and / or wherein the chromogenic indicator substance in a substance mixture with auxiliary substances is included, the auxiliary substances are preferred transition metal salts, Bronsted acids, Lewis acids, acids or bases, salts, carriers and those for immobilization and/or combinations thereof, preference is given to Lewis acids; and or wherein the chromogenic indicator substance is a glycoside obtained by plant extraction, preferably an N-glycoside, O-glycoside, S-glycoside, and/or combinations thereof obtained from plant extraction; and / or wherein the chromogenic indicator substance is a biotechnologically produced glycoside, preferably a biotechnologically produced N-glycoside, O-glycoside, S-glycoside and/or combinations thereof.

9. Article according to claims 7 and 8, wherein the olfactory indicator substance is selected from glycosides, in particular glucosides of sotolon, maple furanone, maltol, ethylmaltol, furaneol, homofuraneol, norfuraneol, eugenol, terpineol, thioterpineol, thymol, 1-octen-3-ol, and/or 2-furfurylthiol; and or wherein the olfactory indicator substance at a temperature greater than or equal to 50°C, preferably greater than or equal to 60°C, more preferably greater than or equal to 70°C is irreversibly cleavable, preferably pyrolyzable; and / or wherein the olfactory indicator substance in a substance mixture with auxiliary substances is included, the auxiliary substances are preferably selected from transition metal salts, Bronsted acids, Lewis acids, bases, salts, carriers, auxiliary substances for immobilization and / or combinations thereof.

10. A composition comprising a chromogenic indicator substance, wherein the chromogenic indicator substance is selected from an ester, thioester, ether, thioether, amide, acetal, hemiacetal, carbamate, glycoside and / or combinations thereof; wherein the chromogenic indicator substance at a temperature greater than or equal to 50°C and less than or equal to 300°C is irreversibly cleavable; and wherein at least one cleavage product of the chromogenic indicator substance has a different absorption spectrum in the visible range from the chromogenic indicator substance or has a different fluorescence, an olfactory indicator substance, wherein the olfactory indicator substance is selected from the group consisting of a glycoside, ester, thioester, ether, thioether, amide, acetal, hemiacetal, carbamate, and / or combinations thereof.

11. Composition according to claim 10, wherein the composition is selected from at least one auxiliary substance transition metal salts, Bronsted acids, Lewis acids, acids, bases, salts, carriers, auxiliary substances for immobilization and / or combinations thereof, wherein the chromogenic indicator substance is a glycoside, preferably a N-glycoside, O-glycoside, S-glycoside and / or combinations, which in a plant extract is present; or wherein the chromogenic indicator substance is a biotechnologically produced glycoside, preferably a biotechnologically produced N-glycoside, O-glycoside, S-glycoside and / or combinations thereof; and / or wherein the olfactory indicator substance is selected from the group consisting of glycoside, preferably selected from N-glucoside, S-glucoside, O-glucoside and / or combinations thereof, and wherein the glycoside preferably is a mono- or oligoglycoside.

12. Use of the composition according to claims 10 or 11 as detector, preferred as a detector for heat generation and for electromagnetic radiation.

## Revendications

1. Procédé pour munir un dispositif technique d'un signal d'avertissement contre la surchauffe,
dans lequel une substance indicatrice chromogène est appliquée sur un dispositif ou ses composants ou une substance indicatrice chromogène est ajoutée à une enveloppe ;
dans lequel la substance indicatrice chromogène est choisie parmi un ester, un thioester, un éther, un thioéther, un amide, un acétal, un hémi-acétal, un carbamate, un glycoside et/ou leurs combinaisons ;
dans lequel la substance indicatrice chromogène est clivable de manière irréversible à une température supérieure ou égale à 50°C et inférieure ou égale à 300°C ; et
dans lequel au moins un produit de clivage de la substance indicatrice chromogène présente un spectre d'absorption différent dans la plage visible de la substance indicatrice chromogène ou une fluorescence différente de la substance indicatrice chromogène ;
dans lequel une substance indicatrice olfactive est en outre appliquée sur le dispositif ou ses composants, ou une substance indicatrice olfactive est ajoutée à l'enveloppe.

2. Procédé selon la revendication 1,
dans lequel la substance indicatrice chromogène est choisie parmi un glycoside, un acétate, un sulfate, un phosphate et/ou leurs combinaisons, de préférence choisie parmi un glycoside, de manière davantage préférée choisie parmi un N-glycoside, un O-glycoside, un S-glycoside et/ou leur combinaison, dans lequel le glycoside est un anomère alpha ou bêta ; et/ou dans lequel la substance indicatrice chromogène est clivable de manière irréversible, de préférence pyrolysable, à une température supérieure ou égale à 60°C, de préférence supérieure ou égale à 70°C ; et/ou
dans lequel la substance indicatrice chromogène est contenue dans un mélange de substances avec des substances auxiliaires, de préférence les substances auxiliaires sont choisies parmi les sels de métaux de transition, les acides de Bronsted, les acides de Lewis, les bases, les sels, les substances de support et les substances pour l'immobilisation et/ou leurs combinaisons, de préférence les acides de Lewis ; et/ou
dans lequel la substance indicatrice chromogène est appliquée par brossage, pulvérisation ou un agent immobilisant ; et/ou dans lequel la substance indicatrice chromogène est choisie parmi l'acétate, le phosphate, le sulfate et/ou leurs combinaisons.

3. Procédé selon l'une des revendications précédentes,
dans lequel la substance indicatrice chromogène est choisie parmi les glycosides du phénol et ses dérivés, l'anthraquinone et ses dérivés, l'hydroquinone et ses dérivés, les benzopyrones et leurs dérivés, la naphtoquinone et ses dérivés ; ou
dans lequel la substance indicatrice chromogène est choisie parmi les glycosides de nitrophénols, de préférence parmi le 4-nitrophényl-β-D-glucoside, le 4-nitrophényl-β-D-galactoside, le 2-nitrophénol-β-D-glucoside ou le 3-nitrophénol-β-D-glucoside ; ou
dans lequel la substance indicatrice chromogène est choisie parmi les glycosides dérivés d'alizarine, de préférence le glycoside d'acide rybérythrique, de manière davantage préférée le 1,2-dihydroxyanthraquinone-primvéroside ; ou
dans lequel la substance indicatrice chromogène est choisie parmi les glycosides de la coumarine et ses dérivés, de préférence parmi le 6,7-dihydroxycoumarine-6-O-β-D-glucoside, le 3,4-cyclohexénoaesculétine-7-β-D-glucoside, le 7-hydroxycoumarine-7-O-β-D-glucoside ou le 4-méthylumbelliférone-7-O-β-D-glucoside ; ou
dans lequel la substance indicatrice chromogène est choisie parmi les glycosides des formes réduites de la juglone, la lawsone et la plumbagine, de préférence parmi le 1,4,5-trihydroxynaphtalène-4-O-β-D-glucoside.

4. Procédé selon la revendication 1 ou 2,
dans lequel la substance indicatrice chromogène est choisie parmi le saligénine-O-β-D-glucoside (salicine), l'acide acétylsalicylique ou l'acétate de 4-nitrophényle ; ou
dans lequel la substance indicatrice chromogène est choisie parmi les glycosides, les sulfates et/ou les phosphates de composés indigoïdes, de préférence l'indoxyl-O-β-D-glucoside (Indican), le phosphate d'indoxyle et/ou le sulfate d'indoxyle ; ou
dans lequel la substance indicatrice chromogène est choisie parmi les dérivés indoxyle halogénés, pseudohalogénés, alkylés, acylés, hydroxylés, nitrés, hétéroanalogues ou autrement substitués en tant que précurseurs de colorant glycosidiques.

5. Procédé selon l'une des revendications précédentes,
dans lequel la substance indicatrice olfactive est choisie parmi les glucosides de sotolon, la furanone d'érable, le maltol, l'éthylmaltol, le furanéol, l'homofuranéol, le norfuranéol, l'eugénol, le terpinéol, le thioterpinéol, le thymol, le 1-octène-3-ol et/ou le 2-furfurylthiol ; et/ou
dans lequel la substance indicatrice olfactive est appliquée simultanément avec la substance indicatrice chromogène.

6. Procédé selon la revendication 5,
dans lequel la substance indicatrice olfactive est clivable, de préférence clivable de manière irréversible, de manière davantage préférée pyrolysable, à une température supérieure ou égale à 50°C, de préférence supérieure ou égale à 60°C, de manière davantage préférée supérieure ou égale à 70°C ; et/ou
dans lequel la substance indicatrice olfactive est choisie dans le groupe constitué d'un glycoside, d'un ester, d'un thioester, d'un éther, d'un thioéther, d'un amide, d'un acétal, d'un hémiacétal, d'un carbamate et/ou de leurs combinaisons, de préférence choisie parmi un glycoside, de manière davantage préférée choisie parmi un N-glucoside, un S-glucoside, un O-glucoside et/ou leurs combinaisons, dans lequel le glycoside est de préférence un mono ou oligoglycoside ; et/ou dans lequel la substance indicatrice chromogène et/ou la substance indicatrice olfactive est appliquée avec un film applicable, de préférence un autocollant ; et/ou
dans lequel la substance indicatrice chromogène et/ou la substance indicatrice olfactive sont appliquées avec une substance auxiliaire qui inhibe ou empêche le clivage enzymatique ou la dégradation par des micro-organismes de la substance indicatrice chromogène et/ou de la substance indicatrice olfactive.

7. Article comprenant
une substance indicatrice chromogène,
dans lequel la substance indicatrice chromogène est choisie parmi un ester, un thioester, un éther, un thioéther, un amide, un acétal, un hémi-acétal, un carbamate, un glycoside et/ou leurs combinaisons ;
dans lequel la substance indicatrice chromogène est clivable de manière irréversible à une température supérieure ou égale à 50°C et inférieure ou égale à 300°C ; et
dans lequel au moins un produit de clivage de la substance indicatrice chromogène présente un spectre d'absorption différent dans la plage visible de la substance indicatrice chromogène ou une fluorescence différente de la substance indicatrice chromogène ;
une substance indicatrice olfactive, et
dans lequel l'article est un film, un autocollant ou un applicateur.

8. Article selon la revendication 7,
dans lequel la substance indicatrice chromogène est choisie parmi un glycoside, un acétate, un sulfate, un phosphate et/ou leurs combinaisons, de préférence choisie parmi un glycoside, de manière davantage préférée choisie parmi un N-glycoside, un O-glycoside, un S-glycoside et/ou leur combinaison, dans lequel le glycoside est un anomère alpha ou bêta ; et/ou dans lequel la substance indicatrice chromogène est choisie parmi l'acétate, le phosphate, le sulfate et/ou leurs combinaisons ; et/ou
dans lequel la substance indicatrice chromogène est contenue dans un mélange de substances avec des substances auxiliaires, de préférence les substances auxiliaires sont des sels de métaux de transition, des acides de Bronsted, des acides de Lewis, des acides ou des bases, des sels, des substances de support et des substances pour l'immobilisation et/ou leurs combinaisons, de préférence des acides de Lewis ; et/ou
dans lequel la substance indicatrice chromogène est un glycoside obtenu à partir d'une extraction végétale, de préférence un N-glycoside, un O-glycoside, un S-glycoside et/ou leurs combinaisons obtenus à partir d'une extraction végétale ; et/ou dans lequel la substance indicatrice chromogène est un glycoside produit biotechnologiquement, de préférence un N-glycoside, un O-glycoside, un S-glycoside produit biotechnologiquement et/ou leurs combinaisons.

9. Article selon les revendications 7 et 8,
dans lequel la substance indicatrice olfactive est choisie parmi les glycosides, en particulier les glucosides de sotolon, la furanone d'érable, le maltol, l'éthylmaltol, le furanéol, l'homofuranéol, le norfuranéol, l'eugénol, le terpinéol, le thioterpinéol, le thymol, le 1-octène-3-ol et/ou le 2-furfurylthiol ; et/ou
dans lequel la substance indicatrice olfactive est clivable de manière irréversible, de préférence pyrolysable, à une température supérieure ou égale à 50°C, de préférence supérieure ou égale à 60°C, de manière davantage préférée supérieure ou égale à 70°C ; et/ou
dans lequel la substance indicatrice olfactive est contenue dans un mélange de substances avec des substances auxiliaires, de préférence les substances auxiliaires sont choisies parmi les sels de métaux de transition, les acides de Bronsted, les acides de Lewis, les bases, les sels, les substances de support, les substances auxiliaires pour l'immobilisation et/ou leurs combinaisons.

10. Composition comprenant
une substance indicatrice chromogène,
dans laquelle la substance indicatrice chromogène est choisie parmi un ester, un thioester, un éther, un thioéther, un amide, un acétal, un hémi-acétal, un carbamate, un glycoside et/ou leurs combinaisons ;
dans laquelle la substance indicatrice chromogène est clivable de manière irréversible à une température supérieure ou égale à 50°C et inférieure ou égale à 300°C ; et
dans laquelle au moins un produit de clivage de la substance indicatrice chromogène présente un spectre d'absorption différent dans la plage visible de la substance indicatrice chromogène ou une fluorescence différente de la substance indicatrice chromogène,
une substance indicatrice olfactive,
dans laquelle la substance indicatrice olfactive est choisie dans le groupe constitué d'un glycoside, d'un ester, d'un thioester, d'un éther, d'un thioéther, d'un amide, d'un acétal, d'un hémi-acétal, d'un carbamate et/ou de leurs combinaisons.

11. Composition selon la revendication 10,
dans laquelle la composition contient au moins une substance auxiliaire choisie parmi les sels de métaux de transition, les acides de Bronsted, les acides de Lewis, les acides, les bases, les sels, les substances de support, les substances auxiliaires pour l'immobilisation et/ou leurs combinaisons,
dans laquelle la substance indicatrice chromogéne est un glycoside, de préférence un N-glycoside, un O-glycoside, un S-glycoside et/ou des combinaisons, qui est présent dans un extrait de plante ; ou
dans laquelle la substance indicatrice chromogène est un glycoside produit biotechnologiquement, de préférence un N-glycoside, un O-glycoside, un S-glycoside produit biotechnologiquement et/ou leurs combinaisons ; et/ou
dans laquelle la substance indicatrice olfactive est choisie dans le groupe constitué d'un glycoside, de préférence choisie parmi un N-glucoside, un S-glucoside, un O-glucoside et/ou leurs combinaisons, et dans laquelle le glycoside est de préférence un mono ou oligoglycoside.

12. Utilisation de la composition selon les revendications 10 ou 11 comme détecteur, de préférence comme détecteur de génération de chaleur et de rayonnement électromagnétique.
